(19) Europäisches Patentamt European Patent Office Office européen des brevets

(11) EP 2 887 203 B1

(12) **EUROPEAN PATENT SPECIFICATION**

(45) Date of publication and mention of the grant of the patent:
**20.12.2017 Bulletin 2017/51**

(51) Int Cl.:
***G06F 3/14*** *(2006.01)*

(21) Application number: **14177872.0**

(22) Date of filing: **21.07.2014**

(54) **Method, apparatus and terminal device for adaption of page**

Verfahren, Vorrichtung und Endgerätevorrichtung zur Anpassung von Seiten

Procédé, appareil et dispositif terminal pour adaptation de page

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2013 CN 201310699702**

(43) Date of publication of application:
**24.06.2015 Bulletin 2015/26**

(73) Proprietor: **Xiaomi Inc.**
**Beijing 100085 (CN)**

(72) Inventor: **Wang, Yi**
**Haidian District Beijing (CN)**

(74) Representative: **Hanna Moore + Curley**
**Garryard House**
**25/26 Earlsfort Terrace**
**Dublin 2, D02 PX51 (IE)**

(56) References cited:
**US-A1- 2010 088 630     US-A1- 2012 075 531**
**US-A1- 2013 147 845**

## Description

### CROSS-REFERENCE TO RELATED APPLICATIONS

This application is based upon and claims priority to Chinese Patent Application 201310699702.9, filed on December 18, 2013.

### TECHNICAL FIELD

The present disclosure generally relates to technical field of data processing, and more particularly, to a method, an apparatus and a terminal device for adaption of page.

### BACKGROUND

Nowadays, as mobile devices become more and more popular, it has become acceptable for many people to read e-books (electronic books) on a mobile terminal. However, display interfaces of the mobile devices differ greatly from each other on size, which brings about a challenge to typeset content of the books.

Formats of traditional book files are generally divided into a streaming document format and a fixed-layout document format. The streaming documents, such as TXT (Text File) and ePub (Electronic Publication), are able to be adapted according to a width of the display interface. On the contrary, the fixed-layout documents, such as PDF (Portable Document Format), cannot meet adaptive requirements for display interfaces with different sizes. Moreover, from a viewpoint of integrating text and graphics, an adaption of the mobile terminal involves not only the width of display interface, but also an aspect ratio of the display interface. For example, it is customary for the cover and illustration page in an e-book to fill the whole display interface. Since dimensions of a page are fixed, some problems may occur on adaption with respect to display interfaces with different ratios.

In related art, if a picture is desired to fill the whole display interface as much as possible for devices with different dimensions, there may be two solutions. In one of such solutions, the picture is cropped to conform to an aspect ratio of the display interface. In the other solution, a margin is left on the display interface in a certain direction, so as to ensure the display interface to be filled with content in the other direction. A drawback of the first solution lies in that some valid content may be clipped off. For example, if a picture takes an aspect ratio of 4:3 (1024 x 768), 192 pixels will be clipped off in the width direction on a display interface with an aspect ratio of 16:9, which is unacceptable in some cases such as a cover content. As to the second solution, it may cause margins being left such that a desired effect in which the whole display interface is filled up would not be achieved.

US 2013/0147845 A1 discloses a server which receives a request for delivery an image to a mobile device, adjust the image based on the mobile device's display capabilities, and transmit the adjusted image to the mobile device.

US 2010/0088630 A1 discloses a content aware adaptive display comprising a media image that can be displayed on an integrated display of a media device. The media device can detect that a display device is proximate the media device, determine a display orientation for the media image at the display device, and communicate the media image to the display device that then displays the media image in the determined display orientation.

US 2012/0075531A1 discloses a method for client-side compositing of video streams. The method includes receiving, by the video display device, a multiplexed data stream from a remote video server. The multiplexed data stream includes substreams, where the substreams includes a descriptor substream, at least one media substream, and a compositing-instruction substream. The method further includes demultiplexing, by the video display device, the multiplexed data stream into the substreams according to the descriptor substream and displaying, by the video display device, the at least one media substream on a display screen according to the compositing-instruction substream, where the compositing-instruction substream includes instructions on a composition of the at least one media substream.

### SUMMARY

In order to overcome problems in the related art, the present invention provides a method, an apparatus, and a terminal device for adaption of page, in accordance with claims which follow, which allow a page to be adapted for display interfaces with various aspect ratios, without problems of clipping off valid content or leaving a blank area.

According to a first aspect of embodiments of the present disclosure, there is provided a method for adaption of page, including: detecting dimensions of a display interface; determining one preferred page from N preset pages with different dimensions, wherein a dimension difference between the preferred page and the display interface falls within a preset range of difference, and N is a positive integer greater than or equal to 2; and displaying the preferred page on the display interface.

The present disclosure, in part, has advantages including: a page may be adapted automatically to terminal devices with different dimensions, so as to be displayed on the terminal devices with different dimensions, without problems of leaving vast blank areas, margins or unclear typesetting, while achieving a clear typesetting, a good effect of adaption, and convenience for user experience.

The determining one preferred page from the N preset pages with different dimensions includes: determining an aspect ratio of the display interface according to the dimensions of the display interface; determining a numerical interval in which the aspect ratio of the display interface falls from a plurality of preset numerical intervals of aspect ratio; and determining an adaptive page configured for the numerical interval in which the aspect ratio of the display interface falls as the preferred page.

The present disclosure, in part, has advantages including: each one of the plurality of preset numerical intervals of aspect ratio is configured with one adaptive page; and when the numerical interval in which the aspect ratio of the display interface falls is determined, the adaptive page configured for the numerical interval in which the aspect ratio of the display interface falls is determined as the preferred page; in this way, there is provided an approach to determine the preferred page.

The determining of one preferred page from the N preset pages with different dimensions includes: determining a respective clipped amount for each page of the N pages according to the dimensions of the display interface; and determining a page having a minimum clipped amount among the N pages as the preferred page.

The present disclosure provides another approach to determine the preferred page.

The determining the respective clipped amount for each page of the N pages according to the dimensions of the display interface includes: determining respective clipped amount in length for each page of the N pages according to the dimensions of the display interface; and the determining the page having the minimum clipped amount among the N pages as the preferred page includes: determining a page having a minimum clipped amount in length among the N pages as the preferred page.

The present disclosure, in part, has advantages including: a page having a minimum clipped amount in length among the N pages is determined as the preferred page, which ensures that valid content will not be clipped off, and achieves a good effect of adaption.

The determining the respective clipped amount for each page of the N pages according to the dimensions of the display interface includes: determining respective clipped amount in width for each page of the N pages according to the dimensions of the display interface; and the determining the page having the minimum clipped amount among the N pages as the preferred page includes: determining a page having a minimum clipped amount in width among the N pages as the preferred page.

The present disclosure, in part, has advantages including: a page having a minimum clipped amount in width among the N pages is determined as the preferred page, which ensures that valid content will not be clipped off, and achieves a good effect of adaption.

According to a second aspect of embodiments of the present disclosure, there is provided an apparatus for adaption of page, including: a detection module configured to detect dimensions of a display interface; a determination module configured to determine a preferred page from N preset pages with different dimensions, wherein a dimension difference between the preferred page and the display interface falls within a preset range of difference, and N is a positive integer greater than or equal to 2; and a display module configured to display the preferred page on the display interface.

The determination module includes: an aspect ratio determination unit configured to determine an aspect ratio of the display interface according to the dimensions of the display interface; an interval determination unit configured to determine a numerical interval in which the aspect ratio of the display interface falls from a plurality of preset numerical intervals of aspect ratio; and a first processing unit configured to determine an adaptive page configured for the numerical interval in which the aspect ratio of the display interface falls as the preferred page.

The determination module includes: a clipped amount determination unit configured to determine respective clipped amount for each page of the N pages; and a second processing unit configured to determine a page having a minimum clipped amount among the N pages as the preferred page.

According to a third aspect of embodiments of the present disclosure, there is provided a terminal device, including: a memory; and one or more programs stored in the memory and configured to be executed by one or more processors, wherein the one or more programs comprises instructions for performing the following functions: detecting dimensions of a display interface; determining one preferred page from N preset pages with different dimensions, wherein a dimension difference between the preferred page and the display interface falls within a preset range of difference, and N is a positive integer greater than or equal to 2; and displaying the preferred page on the display interface.

According to a fourth aspect of embodiments of the present disclosure, there is provided a program product having stored therein instructions that, when executed by one or more processors of a terminal, causes the terminal to perform:

> detecting dimensions of a display interface;
> determining one preferred page from N preset pages with different dimensions, wherein a dimension difference between the preferred page and the display interface falls within a preset range of difference, and N is a positive integer greater than or equal to 2; and displaying the preferred page on the display interface.

It is to be understood that both the foregoing general description and the following detailed description are exemplary and explanatory only and are not restrictive of the present disclosure.

## BRIEF DESCRIPTION OF THE DRAWINGS

The accompanying drawings, which constitute a part of the description, are provided for a better understanding of the present disclosure. In the drawings:

Fig. 1 is a flow chart showing a first processing method currently performed for displaying a page of 4:3 with a widescreen display;
Fig. 2 is a flow chart showing a second processing method currently performed for displaying a page of 4:3 with a widescreen display;
Fig. 3 is a flow chart showing a primary method for adaption of page according to embodiments of the present disclosure;
Fig. 4 is a schematic view showing a method for adaption of page according to the invention as claimed;
Fig. 5 is a schematic view showing a method for adaption of page according to a second preferred implementation in the embodiments of the present disclosure;
Fig. 6 is a schematic view showing a method for adaption of page according to a third preferred implementation in the embodiments of the present disclosure;
Fig. 7A is a schematic view showing an implementation for applying the method for adaption of page according to the embodiments of the present disclosure.
Fig. 7B is a schematic view showing a page with an aspect ratio of 4:3;
Fig. 7C is an effect figure of displaying a page with an aspect ratio of 4:3 on a display interface with an aspect ration of 16:11;
Fig. 8 is a block diagram illustrating a primary structure of an apparatus for adaption of page according to the embodiments of the present disclosure;
Fig. 9 is a block diagram illustrating a first type of particular structure of the determination module according to the embodiments of the present disclosure;
Fig. 10 is a block diagram illustrating a second type of particular structure of the determination module according to the embodiments of the present disclosure;
Fig. 11 is a block diagram illustrating a terminal device according to the embodiments of the present disclosure.

Explicit embodiments of the present disclosure that have been illustrated in the above drawings will be described in more detail hereinafter. These drawings are intended to explain the concept of the present disclosure to those skilled in the art with reference to particular embodiments.

## DETAILED DESCRIPTION

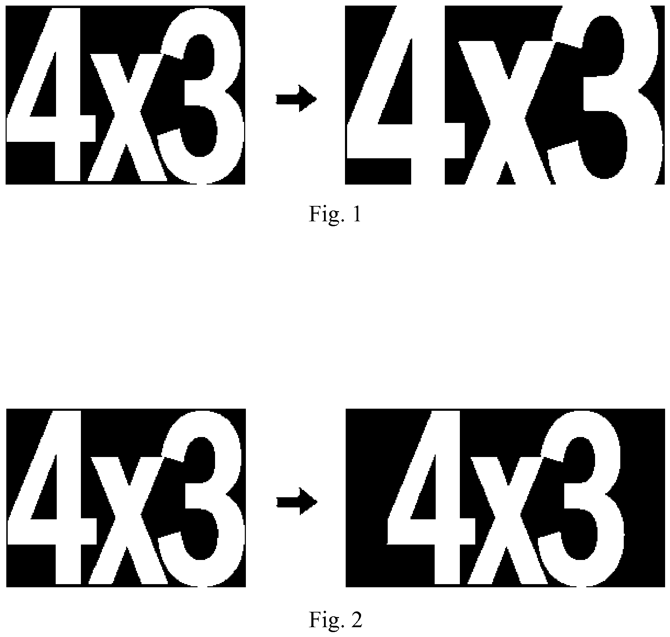

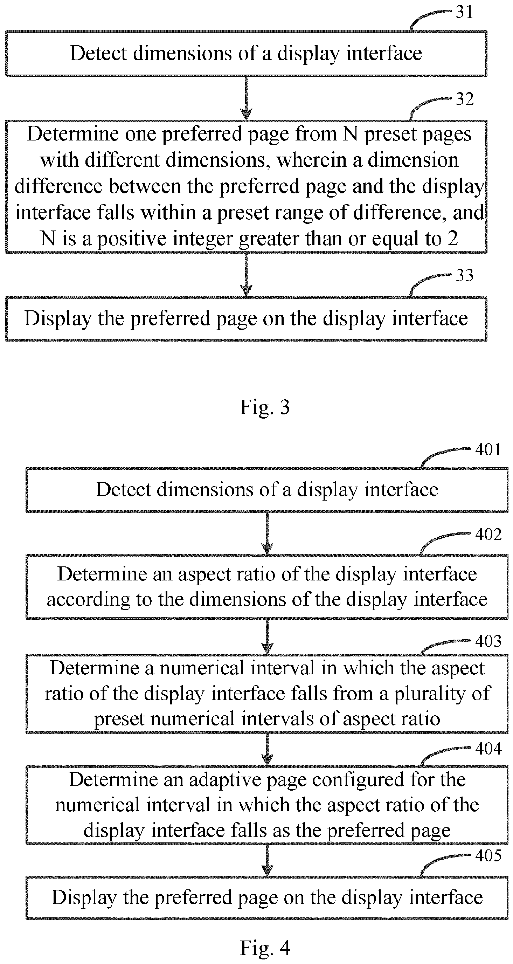

In order to make the objects, the technical solutions and advantages of the present disclosure more clear, the present disclosure will be described in a further detail with reference to the embodiments and drawings.
Embodiments of the present disclosure provide a method, an apparatus, a terminal and a server for adaption of page. The present disclosure will be described in detail with reference to accompanying drawings as follows.
At present, for devices with different dimensions, if a page is desired to fill the whole display interface of the device as much as possible, for example, when a page having an aspect ratio of 4:3 is displayed on a widescreen display, there are two kinds of processing methods.
As shown in Fig. 1, a page having an aspect ratio of 4:3 shown on the left side of Fig. 1 is zoomed in proportionally, until a widescreen display interface having an aspect ratio of 16:9 is paved with the page in a width direction, and a display result is as shown on the right side of Fig. 1. As can be seen from the display result, top and bottom of the page are clipped off in this processing method, which condition is unacceptable generally.
As shown in Fig. 2, when a page having an aspect ratio of 4:3 shown on the left side of Fig. 2 is displayed on the center of a widescreen having an aspect ratio of 16:9, black margins are needed to be appended on both sides so as to fill a display range of the widescreen display interface, and a display result is as shown on the right side of Fig. 2. As can be seen from the display result, visual effect of user view may be affected in this processing method. Moreover, since both sides of the display interface display the black margins always, working state would be uneven over the entire display screen, which is likely to accelerate aging of the display screen.
It can be achieved by technical solutions provided in the embodiments of the present disclosure that a page adaption may be performed on display interfaces with various aspect ratios, in which problems caused by cutting valid content off or leaving margins may be avoided.
In an embodiment, as shown in Fig. 3, illustrating a flow chart of a primary method for adaption of page according to embodiments of the present disclosure, this method may be implemented by various devices such as a mobile phone, a tablet PC, or an e-book reader, and includes the following steps 31-33.
In step 31, dimensions of a display interface are detected.
Herein, the dimensions of the display interface may include: dimensions of length and width of the display interface.
In step 32, one preferred page is determined from N preset pages with different dimensions, wherein a dimension difference between the preferred page and the display interface falls within a preset range of difference, and N is a positive integer greater than or equal to 2.

Herein, the N pages described above may have a same content, or may have different content. Herein, if the N pages have a same content, which may be suitable for a scenario in which a certain electronic picture needs to be displayed on different terminal devices, since dimensions of display interfaces of respective terminals may be different from each other, a plurality of different dimensions are needed to be preset for the electronic picture. If the N pages are pages having different content, which may be suitable for a scenario in which a lot of landscape scenery photographs may be taken by a user on his/her journey and may need to be shared with the family or friends, since terminal devices of the family or friends may have display interfaces with different dimensions, each photograph may need to be preset with different dimensions so as to be better presented.

In step 33, the preferred page is displayed on the display interface.

The step 32 described above is performed to determine one preferred page from the N preset pages with different dimensions. Such a determination may be achieved by several methods as follows.

**First Method**

The step 32 described above may include the following steps A1-A3.

In step A1, an aspect ratio of the display interface is determined according to the dimensions of the display interface.

In step A2, a numerical interval in which the aspect ratio of the display interface falls is determined from a plurality of preset numerical intervals of aspect ratio.

Among the plurality of numerical intervals, difference values between a maximum and a minimum in respective numerical intervals may be identical to or different from each other.

In step A3, an adaptive page configured for the numerical interval in which the aspect ratio of the display interface falls is determined as the preferred page.

Herein, one adaptive page may be configured for each one of the plurality of preset numerical intervals of aspect ratio. When the numerical interval in which the aspect ratio of the display interface falls is determined, the adaptive page configured for the numerical interval in which the aspect ratio of the display interface falls may be determined as the preferred page. In this way, there is provided an approach to determine the preferred page.

It may also be achieved by determining respective clipped amount for each page of the N pages according to the dimensions of the display interface, and then determining a page which has a minimum clipped amount among the N pages as the preferred page. Details will be given in second and third methods as follows.

**Second Method**

The step 32 described above may include the following steps B1-B2.

In step B1, respective clipped amount in length of each page among the N pages is determined according to the dimensions of the display interface.

In step B2, a page which has a minimum clipped amount in length among the N pages is determined as the preferred page.

For example, the respective clipped amounts in length of each page among the N pages may be determined according to an equation as follows:

$$\frac{(w_i - w_{id})}{h_i} = \frac{w_x}{h_x}, \quad i = 1, 2, \cdots$$

Herein, $w_{id}$ is a clipped amount in length of the $i$th page in the N pages, $w_i$ is a length of the $i$th page, $h_i$ is a width of the $i$th page, $w_x$ is a length of the display interface, and $h_x$ is a width of the display interface.

A page which satisfies $0 \leq w_{id} < w_i \times m_w \%$ and has a minimum numerical value of $w_{id}$ may be determined as the prefered page. Herein, $m_w\%$ is a preset maximum ratio for page clipping in length.

In this way, a clipped amout in length of page can be smaller than the preset maximum clipped amount in length of page, that is $w_i \times m_w \%$, such that valid content may be prevented from being clipped off, while achieving a good effect of adaption.

**Third Method**

The step 32 described above may include the following steps C1-C2.

In step C1, respective clipped amount in width of each page among the N pages is determined according to the dimension of the display interface.

In step C2, a page which has a minimum clipped amount in width among the N pages is determined as the preferred page.

For example, the respective clipped amount in width of each page among the N pages may be determined according to an equation as follows:

$$\frac{w_i}{(h_i - h_{id})} = \frac{w_x}{h_x}, \quad i = 1, 2, \cdots$$

Herein, $h_{id}$ is a clipped amount in width of the $i$th page in the N pages, $w_i$ is a length of the $i$th page, $h_i$ is a width of the $i$th page, $w_x$ is a length of the display interface, $h_x$ is a width of the display interface.

A page which satisfies $0 \leq h_{id} < h_i \times m_h \%$ and has a minimum numerical value of $hi_d$ is determined as the preferred page. Herein, $m_h \%$ is a preset maximum ratio for page clipping in width.

In this way, a clipped amout in width of page can be smaller than the preset maximum clipped amount in width of page, that is $h_i \times m_h$ %, such that valid content may be prevented from being clipped off, while achieving a good effect of adaption.

Moreover, preferably, a minimum aspect ratio of the N preset pages with different dimensions is 4:3; or, a maximum aspect ratio of the N preset pages with different dimensions is 16:9. Alternatively, a minimum aspect ratio of the N preset pages with different dimensions is 4:3, and a maximum aspect ratio of the N preset pages with different dimensions is 16:9. Nowadays, an aspect ratio of display interface for a mainstream mobile terminal generally ranges from 4:3 to 16:9, which, in general, may be directly adopted as two points of aspect ratios. Therefore, there may be provided with two pages with different aspect ratios, one is 4:3, and the other is 16:9. In this way, for almost all kinds of dimensions of display interfaces, one page which is closest thereto may be selected such that valid content may be prevented from being clipped off and margin may be prevented from being left on the page.

With the technical solutions described above, a page may be adapted automatically to smart terminal devices (e.g. smart phone, tablet PC, and PC) with different dimensions, so as to be displayed on the smart terminal devices with different dimensions without problems of leaving vast blank areas, margins or unclear typesetting, while achieving a clear typesetting, a good effect of adaption, and convenience for user experience.

Some implementing manners for various parts in the embodiment shown in Fig. 3 are described as above. The implementing process may be described in detail by means of several embodiments as follows.

**First Embodiment**

Fig. 4 shows a method for adaption of page according to a first preferred implementation of the invention as claimed. In this embodiment, an adaptive page configured for the numerical interval in which the aspect ratio of the display interface falls is determined as the preferred page. The method includes the following steps.

In step 401, dimensions of a display interface are detected.

In step 402, an aspect ratio of the display interface is determined according to the dimensions of the display interface.

In step 403, a numerical interval in which the aspect ratio of the display interface falls is determined from a plurality of preset numerical intervals of aspect ratio.

In step 404, an adaptive page configured for the numerical interval in which the aspect ratio of the display interface falls is determined as the preferred page.

In step 405, the preferred page is displayed on the display interface.

For example, there may be three preset numerical intervals of aspect ratio, [4/3,3/2], [3/2,5/3], and [5/3,16/9], and one adaptive page may be configured for each numerical interval of aspect ratio among the three numerical intervals of aspect ratio (when an aspect ratio is a numerical value within an interval, the adaptive page may present a good display effect on a display interface with the current aspect ratio, that is, valid content may be prevented from being clipped off and margin may be prevented from being left). The aspect ratio of the display interface is detected to be 13/9, thus it is determined that the aspect ratio 13/9 of the display interface falls within the numerical interval [4/3, 3/2], then the adaptive page configured for the numerical interval [4/3, 3/2] is determined as the preferred page.

In this embodiment of the invention, one adaptive page is configured for each numerical interval among the plurality of preset numerical intervals of aspect ratio. When the numerical interval in which the aspect ratio of the display interface falls is determined, the adaptive page configured for the numerical interval in which the aspect ratio of the display interface falls may be determined as the preferred page. In this way, there is provided an approach to determine the preferred page.

**Second Embodiment**

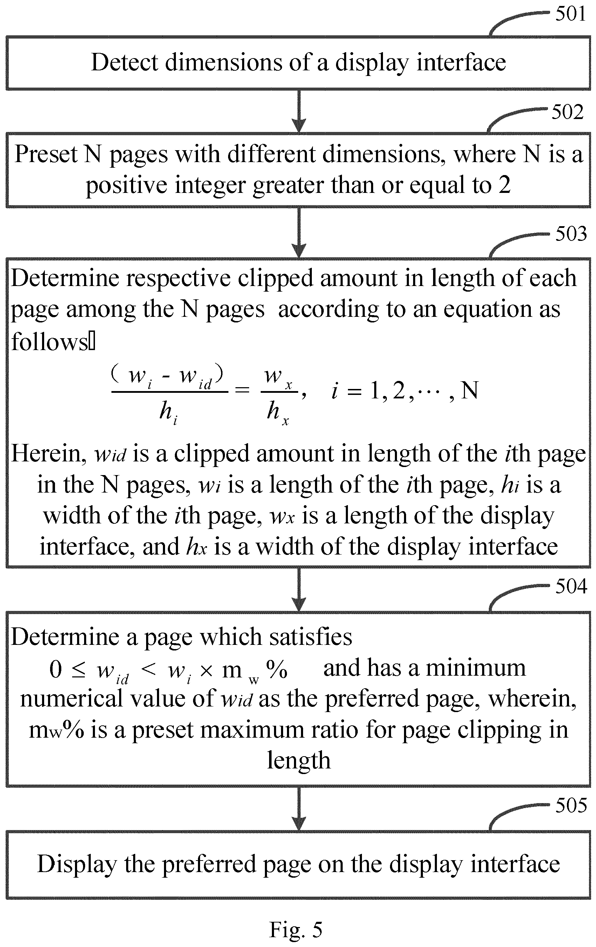

Fig. 5 shows a method for adaption of page according to a second preferred implementation in the embodiments of the present disclosure. In this embodiment, a clipped amount of page in length is made to be smaller than a maximum clipped amount of page in length, that is, $w_i \times m_w$ %. The method includes the following steps.

In step 501, dimensions of a display interface are detected.

In step 502, N pages with different dimensions are preset, where N is a positive integer greater than or equal to 2.

Herein, the step 502 may be performed prior to the step 501. That is, N pages with different dimensions may be preset before the dimensions of the display interface are detected, where N is a positive integer greater than or equal to 2.

In step 503, respective clipped amount in length of each page among the N pages is determined according to an equation as follows:

$$\frac{(w_i - w_{id})}{h_i} = \frac{w_x}{h_x}, \quad i = 1, 2, \cdots$$

Herein, $w_{id}$ is a clipped amount in length of the $i$th page in the N pages, $w_i$ is a length of the $i$th page, $h_i$ is a width of the $i$th page, $w_x$ is a length of the display interface, and $h_x$ is a width of the display interface.

In step 504, a page which satisfies $0 \leq w_{id} < w_i \times m_w$ % and has a minimum numerical value of $w_{id}$ is determined as the preferred page. Herein, $m_w$% is a preset maximum ratio for page clipping in length.

If there are at least two $w_{id}$ satisfying the condition of $0 \leq w_{id} < w_i$ x m$_w$ %, a page with $w_{id}$ having the minimum numerical value is taken as the preferred page.

In step 505, the preferred page is displayed on the display interface.

For example, three pages with different aspect ratios, that is, pages with aspect ratios of 4:3, 5:3, and 16:9, may be preset. These three pages have lenghs of 12, 15, and 16, respectively, a same width of 9, and a same maximum ratio for page clipping in length of 10%. The aspect ratio of the display interface is detected to be 13:9, then respective clipped amounts in length of each page among the three pages are 1, 2, and 3, respectively, and respective ratios for clipping of the three pages are 8.3%, 13.3%, and 18.75%, respectively. Thus, the page having a length of 12 and a width of 9 is determined as the preferred page.

In the second embodiment, a clipped amout in length of page is made to be smaller than the preset maximum clipped amount in length of page, that is $w_i \times$ m$_w$ %, such that valid content may be prevented from being clipped off, while achieving a good effect of adaption.

**Third Embodiment**

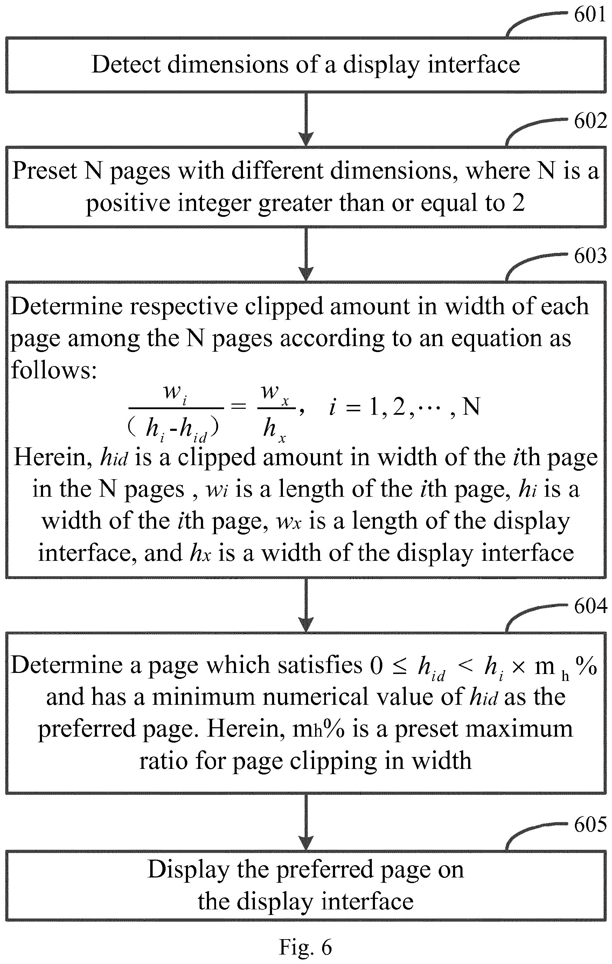

Fig. 6 shows a method for adaption of page according to a third preferred implementation in the embodiments of the present disclosure. In this embodiment, a clipped amount of page in width is made to be smaller than a preset maximum clipped mount of page in width, that is, $h_i \times$ m$_h$ %. The method includes the following steps.

In step 601, dimensions of a display interface are detected.

In step 602, N pages with different dimensions are preset, where N is a positive integer greater than or equal to 2.

Herein, the step 602 may also be performed prior to the step 601. That is, N pages with different dimensions may be preset before the dimensions of the display interface are detected, where N is a positive integer greater than or equal to 2.

In step 603, respective clipped amount in width of each page among the N pages is determined according to an equation as follows:

$$\frac{w_i}{(h_i \text{-} h_{id})} = \frac{w_x}{h_x}, \quad i = 1, 2, \cdots$$

Herein, $h_{id}$ is a clipped amount in width of the $i$th page of the N pages, $w_i$ is a length of the $i$th page, $h_i$ is a width of the $i$th page, $w_x$ is a length of the display interface, and $h_x$ is a width of the display interface.

In step 604, a page which satisfies $0 \leq h_{id} < h_i \times$ m$_h$ % and has a minimum numerical value of $h_{id}$ is determined as the preferred page. Herein, m$_h$% is a pre-

set maximum ratio for page clipping in width.

If there are at least two $h_{id}$ satisfying the condition of $0 \leq h_{id} < h_i \times$ m$_h$ %, a page with $h_{id}$ having the minimum numerical value is taken as the preferred page.

In step 605, the preferred page is displayed on the display interface.

In the third embodiment, a clipped amout in width of page is made to be smaller than the preset maximum clipped amount in width of page, that is $h_i \times$ m$_h$ %, such that valid content may be prevented from being clipped off, while achieving a good effect of adaption.

**Fourth Embodiment**

The fourth embodiment may be applied into such a scenario: since an aspect ratio of display interface for the mainstream mobile terminal generally ranges from 4:3 to 16:9, three pages with aspect ratios located between 4:3 and 16:9, that is, 4:3, 5:3, and 16:9, may be provided, and the content of the three pages are the same.

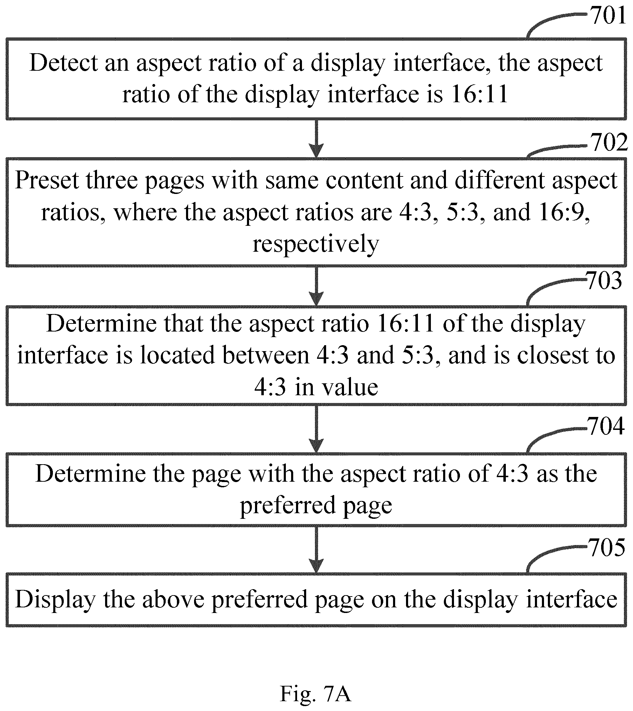

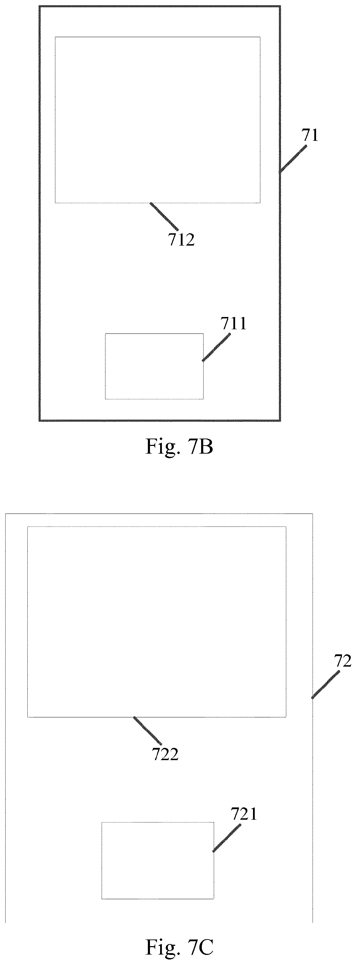

Fig. 7A shows an implementation for applying the method for adaption of page according to the embodiments of the present disclosure. The method includes the following steps.

In step 701, an aspect ratio of a display interface is detected. The aspect ratio of the display interface is 16:11.

In step 702, three pages with same content and different aspect ratios are preset, where the aspect ratios are 4:3, 5:3, and 16:9, respectively.

In step 703, the aspect ratio 16:11 of the display interface is located between 4:3 and 5:3, and is closest to 4:3 in value.

In step 704, the page with the aspect ratio of 4:3 is determined as the preferred page.

In step 705, the above preferred page is displayed on the display interface.

As shown in 7B, there is a page 71 with an aspect ratio of 4:3, which includes a picture of smiling face 711, and a cover picture of NEWSTAR textbook 712. As shown in 7C, illustrating an effect figure 72 when the page 71 with the aspect ratio of 4:3 is displayed on the display interface with the aspect ratio of 16:11, a picture of smiling face 721 is an effect figure of the picture of smiling face 711 after being displayed, and a cover picture of NEWSTAR textbook 722 is an effect figure of the cover picture of NEWSTAR textbook 712 after being displayed.

In the fourth embodiment, the page with an aspect ratio of 4:3 is selected from the preset three pages with aspect ratios between 4:3 and 16:9 (the aspect ratios are 4:3, 5:3, and 16:9, respectively), as the preferred page to be displayed on the display interface with aspect ratio of 16:11. Thus, valid content is prevented from being clipped off, while a good effect of adaption is achieved.

Noted that, in practical applications, other alternative embodiments of the present disclosure may be formed by any combination of those alternative embodiments described above, and details thereof may be omitted here.

The method for adaption of page is described as above, which process may be performed by an apparatus. The interior function and structure of the apparatus may be described hereinafter.

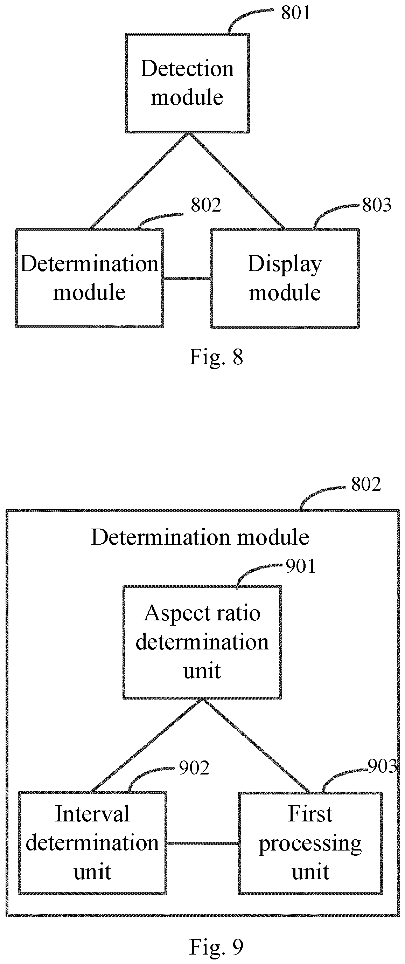

In an embodiment, as shown in Fig. 8, an apparatus for adaption of page includes a detection module 801, a determination module 802, and a display module 803.

The detection module 801 is configured to detect dimensions of a display interface.

The determination module 802 is configured to determine one preferred page from N preset pages with different dimensions, wherein a dimension difference between the preferred page and the display interface falls within a preset range of difference, and N is a positive integer greater than or equal to 2.

The display module 803 is configured to display the preferred page on the display interface.

In an embodiment, as shown in Fig. 9, the determination module 802 illustrated above in Fig. 8 may include:

an aspect ratio determination unit 901 configured to determine an aspect ratio of the display interface according to the dimensions of the display interface;
an interval determination unit 902 configured to determine a numerical interval in which the aspect ratio of the display interface falls from a plurality of preset numerical intervals of aspect ratio; and
a first processing unit 903 configured to determine an adaptive page configured for the numerical interval in which the aspect ratio of the display interface falls as the preferred page.

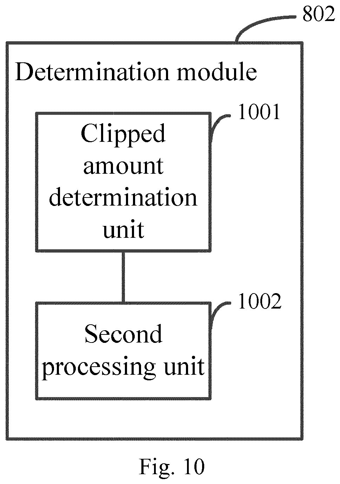

In an embodiment, as shown in Fig. 10, the determination module 802 illustrated above in Fig. 8 may include:

a clipped amount determination unit 1001 configured to determine respective clipped amounts of each page among the N pages according to the dimensions of the display interface; and
a second processing unit 1002 configured to determine a page which has a minimum clipped amount among the N pages as the preferred page.

In an embodiment, the clipped amount determination unit 1001 may be configured to determine the respective clipped amount in length of each page among the N pages according to the following equation:

$$\frac{(w_i - w_{id})}{h_i} = \frac{w_x}{h_x}, \quad i = 1, 2, \cdots$$

Herein, $w_{id}$ is a clipped amount in length of the

$i$th page in the N pages, $w_i$ is a length of the $i$th page, $h_i$ is a width of the $i$th page, $w_x$ is a length of the display interface, and $h_x$ is a width of the display interface.

The second processing unit 1002 is configured to determine a page which satisfies $0 \le w_{id} < w_i \times m_w$ % and has a minimum numerical value of $w_{id}$ as the preferred page. Herein, $m_w$% is a preset maximum ratio for page clipping in length.

In an embodiment, the clipped amount determination unit 1001 may be configured to determine the respective clipped amount in width of each page among the N pages according to the following equation:

$$\frac{w_i}{(h_i - h_{id})} = \frac{w_x}{h_x}, \quad i = 1, 2, \cdots$$

Herein, $h_{id}$ is a clipped amount in width of the $i$th page of the N pages, $w_i$ is a length of the $i$th page, $h_i$ is a width of the $i$th page, $w_x$ is a length of the display interface, and $h_x$ is a width of the display interface.

The second processing unit 1002 is configured to determine a page which satisfies $0 \le h_{id} < h_i \times m_h$ % and has a minimum numerical value of $h_{id}$ as the preferred page. Herein, $h_w$% is a preset maximum ratio for page clipping in width.

In an embodiment, the N preset pages with diffent dimensions have a minimum aspect ratio of 4:3; and/or the N preset pages with diffent dimensions have a maximum aspect ratio of 16:9.

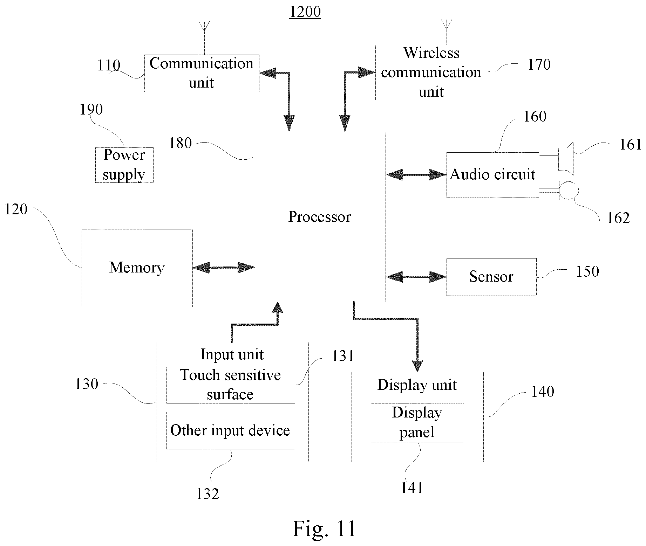

The embodiments of the present disclosure also provide a terminal device. Fig. 11 is a block diagram illustrating a terminal device according to the embodiments of the present disclosure. As shown in Fig. 11, the terminal device may be applied to perform the method for adaption of page provided in the embodiments described above.

A terminal device 1200 may include components such as a communication unit 110, a memory 120 having one or more computer readable storage media, an input unit 130, a display unit 140, a sensor 150, an audio circuit 160, a wireless communication unit 170, a processor 180 having one or more processing core, and a power supply 190. As can be understood by those skilled in the art, the terminal device is not limited to the structure shown in Fig. 11, it may also include more or less components than those shown in this drawing, or may be in combination with certain components, or may be in different arrangement of those components.

The communication unit 110 may be configured to transmit and receive information, or to transmit and receive signal during a procedure of calling. The communication unit 110 may be a network communication device such as a RF (Radio Frequency) circuit, a router, a modem. In particular, when the communication unit 110 is a RF circuit, the communication unit 110 receives downlink information from a base station, and then transfers the information to one or more processors 180 for processing. Also, the communication unit 110 transmits uplink data to the base station. Generally, the RF circuit serving as a communication unit includes, but is not limited to an antenna, at least one amplifier, a tuner, one or more oscillator, a subscriber identity module (SIM) card, a transceiver, a coupler, a LNA (Low Noise Amplifier), and a duplexer, etc. Furthermore, the communication unit 110 may communicate with a network and other devices through wireless communication. The wireless communication may be implemented using any communication standards or protocols, including but not limited to GSM (Global System of Mobile communication), GPRS (General Packet Radio Service), CDMA (Code Division Multiple Access), WCDMA (Wideband Code Division Multiple Access), LTE (Long Term Evolution), e-mail, and SMS (Short Messaging Service), etc. The memory 120 may be configured to store software programs and modules. The processor 180 performs various functional applications and data processing by running the software programs and modules stored in the memory 120. The memory 120 may mainly include a program storage area and a data storage area, wherein the program storage area may be configured to store operating systems, and application programs required by at least one function (such as a function of sound playback, and a function of image playback), etc.; and the data storage area may be configured to store data created during operation of the terminal device 1200 (such as audio data, and phone book), etc. In addition, the memory 120 may include a high-speed random access memory and may also include a non-volatile memory. For example, the memory 120 may include at least one disk storage device, a flash memory device, or other volatile solid-state memory devices. Accordingly, the memory 120 may also include a memory controller to provide access to the memory 120 performed by the processor 180 and the input unit 130.

The input unit 130 may be configured to receive input numbers or characters, and generate input signals from keyboard, mouse, joystick, optical or trackball which are related to user setting and functional control. The input unit 130 may include a touch sensitive surface 131 and other input device 132. The touch sensitive surface 131, also known as a touch screen or a track pad, may collect user's touch operations on or near the touch sensitive surface 131 (such as an operation performed by users using any suitable object or accessory such as a finger, and a touch pen on or near the touch sensitive surface 131), and drive a corresponding connected device according to a preset program. Optionally, the touch sensitive surface 131 may include two parts of a touch detection device and a touch controller. Here, the touch detection device detects a touching position of the user, detects a signal caused by the touch operation, and transmits the signal to the touch controller. The touch controller receives touch information from the touch detection device, transforms it into coordinates of the touch point, and sends the coordinates to the processor 180. The touch controller may also receive a command from the processor 180 and execute the command. In addition, the touch sensitive surface 131 may be realized in various types, such as resistive type, capacitive type, infrared type and surface acoustic wave type. In addition to the touch sensitive surface 131, the input unit 130 may also include other input device 132. The other input device 132 may include but not limited to one or more of a physical keyboard, functional keys (such as volume control keys, and switch buttons), a trackball, a mouse, and a joystick.

The display unit 140 may be configured to display information input by the user or information provided for the user and various graphical user interfaces of the terminal device 1200. These graphical user interfaces may consist of graphics, texts, icons, videos, and any combination thereof. The display unit 140 may include a display panel 141, and optionally, the display panel 141 may be configured with LCD (Liquid Crystal Display), OLED (Organic Light-Emitting Diode), etc. Furthermore, the touch sensitive surface 131 may cover the display panel 141. When a touch operation is detected on or near the touch sensitive surface 131 by the touch sensitive surface 131, the touch operation is sent to the processor 180 to determine the type of touch event, and corresponding visual output will be provided on the display panel 141 by the processor 180 according to the type of touch event. Although in Fig. 11, the touch sensitive surface 131 and the display panel 141 are two separate components to realize input and output functions, in some embodiments, the touch sensitive surface 131 and the display panel 141 may be integrated to realize input and output functions.

The terminal device 1200 may further include at least one kind of sensor 150, such as an optical sensor, a motion sensor and other sensors. The optical sensor may include an ambient optical sensor and a proximity sensor. Here, the ambient optical sensor may adjust the brightness of the display panel 141 according to brightness of the ambient light. The proximity sensor may turn off the display panel 141 and/or backlight when the terminal device 1200 moves close to ear. As one kind of the motion sensor, a gravity acceleration sensor may detect magnitude of acceleration in each direction (typically on three axes), and may detect magnitude and direction of gravity when it is stationary, which may be used in the applications for recognizing the attitudes of the mobile phone (such as horizontal and vertical screen switching, related games, and attitude calibration of a magnetometer), functions related to vibration recognizing (such as a pedometer, and clicking), etc. The terminal device 1200 may also be equipped with other sensors such as a gyroscope, a barometer, a hygrometer, a thermometer, and an infrared sensor, which will not be redundantly described herein.

The audio circuit 160, a speaker 161 and a microphone 162 may provide an audio interface between the user and the terminal device 1200. The audio circuit 160 may transform received audio data into electrical signals which are transmitted to the speaker 161 and transformed into sound signals to be output by the speaker 161. On the other hand, the microphone 162 transforms collected sound signals into electrical signals which are received and transformed into audio data by the audio circuit 160. After being output to the processor 180 to be processed, the audio data is transmitted to, for example, another terminal device via the RF circuit 110, or output to the memory 120 for further processing. The audio circuit 160 may also include an earplug jack to allow a communication between an external earphone and the terminal device 1200.

In order to achieve wireless communication, the terminal device may be configured with a wireless communication unit 170 thereon. The wireless communication unit 170 may be a WIFI (Wireless Fidelity) module. WIFI belongs to short-range wireless transmission technology. The terminal device 1200 may help the user transmit or receive E-mail, browse web pages and access streaming media and the like through the wireless communication unit 170, which provides the user the wireless broadband internet access. Although the wireless communication unit 170 is shown in Fig. 11, it should be understood that, it does not belong to the necessary component of the terminal device 1200, and may be omitted according to requirements within the scope without changing the substance of the present disclosure.

The processor 180 is a control center of the terminal device 1200 using various interfaces and wires to connect respective portions of the whole mobile phone. By running or executing software programs and/or modules stored in the memory 120, calling data stored in the memory 120, and executing various functions of the terminal device 1200 and processing data, the processor 180 proceeds overall monitoring to the mobile phone. Optionally, the processor 180 may include one or more processing core. Optionally, the processor 180 may integrate application processors and modem processors, wherein the application processors may mainly process the operation systems, the user interfaces, the application programs and the like, and the modem processors may mainly process wireless communications. It should be understood that, the above modem processors may not be integrated into the processor 180.

The terminal device 1200 further includes a power supply 190 (for example, a battery) to supply power to respective components. Optionally, the power supply may be logically connected with the processor 180 through a power supply management system, thereby realizing functions of managing charging, discharging, through the power supply management system. The power supply 190 may further include arbitrary components such as one or more DC or AC power supply, a rechargeable system, a power supply malfunction detection circuit, a power supply converter or an inverter, and a power supply state indicator.

Although not shown, the terminal device 1200 may further include a camera, a Bluetooth module or the like, which is not described repeatedly. In the present embodiment, the terminal device may browse webpage using a web browser, and it may further include a memory and one or more programs stored in the memory configured to be executed by one or more processors, the one or more programs including instructions to perform the following operations:

detecting dimensions of a display interface;
determining one preferred page from N preset pages with different dimensions, wherein a dimension difference between the preferred page and the display interface falls within a preset range of difference, and N is a positive integer greater than or equal to 2; and
displaying the preferred page on the display interface.

The memory may also include instructions to perform the following operations:

the determining one preferred page from the N preset pages with different dimensions includes:
determining an aspect ratio of the display interface according to the dimensions of the display interface;
determining a numerical interval in which the aspect ratio of the display interface falls from a plurality of preset numerical intervals of aspect ratio; and
determining an adaptive page configured for the numerical interval in which the aspect ratio of the display interface falls as the preferred page.

The memory may also include instructions to perform the following operations:

the determining one preferred page from the N preset pages with different dimensions includes:
determining respective clipped amount for each page of the N pages according to the dimensions of the display interface; and
determining a page having a minimum clipped amount among the N pages as the preferred page.

The memory may also include instructions to perform the following operations:

the determining the respective clipped amount for each page of the N pages according to the dimensions of the display interface includes:
determining respective clipped amount in length for each page of the N pages according to the dimensions of the display interface; and
the determining the page having the minimum clipped amount among the N pages as the preferred page includes:
determining a page having a minimum clipped amount in length among the N pages as the preferred page.

The memory may also include instructions to perform the following operations:

the determining the respective clipped amount for each page of the N pages according to the dimensions of the display interface includes:
determining respective clipped amount in width for each page of the N pages according to the dimensions of the display interface; and
the determining the page having the minimum clipped amount among the N pages as the preferred page includes:
determining a page having a minimum clipped amount in width among the N pages as the preferred page.

In the embodiments of the present disclosure, a page is able to be adapted automatically for display interfaces of smart terminal devices (e.g. smart phone, tablet PC and the like) with different dimensions. Problems of leaving vast blank areas, margins or unclear typesetting may be prevented from occurring, while a clear typesetting, a good effect of adaption, and convenience for user experience may be achieved.

In addition, the mobile terminal according to the present disclosure may typically be implemented by various handheld terminal devices, such as a mobile phone, and a personal digital assistant (PDA). Therefore, the present disclosure is not intended to be limited to a specific type of mobile terminal.

In addition, the method according to the present disclosure may also be implemented by a computer program executed by a CPU. When executed by the CPU, the computer program performs the above functions defined in the method according to the present disclosure.

In addition, the above steps of the method and the units of the system may also implemented by a controller and a computer-readable storage device which stores computer programs that cause the controller to realize the above steps and functions of the units.

In addition, it should be appreciated that the above mentioned computer-readable storage device (e.g. the memory) may be a volatile memory or a nonvolatile memory, or may include the both. For example, but without limitation, the nonvolatile memory may include a read only memory (ROM), a programmable ROM (PROM), an electrically programmable ROM (EPROM), an electrically erasable programmable ROM (EEPROM), or a flash memory. The volatile memory may include a random access memory (RAM) which may serve as an external cache RAM memory. As an example, but without limitation, the RAM may be configured into various forms, such as a synchronous RAM (DRAM), a dynamic RAM (DRAM), a synchronous DRAM (SDRAM), a double data rate SDRAM (DDR SDRAM), an enhanced SDRAM (ESDRAM), a synchronous link DRAM (SLDRAM) and a direct Rambus RAM (DRRAM). The storage device according to the disclosed aspects is intended to include but not limited to these and other suitable types of memories.

It should be appreciated by those skilled in the art that, various exemplary logical blocks, modules, circuits, and algorithm steps described in conjunction with the present disclosure may be implemented as electronic hardware, computer software or combination of both. In order to clearly illustrate the interchangeability between the hardware and the software, a general description has been given to various illustrative components, blocks, modules, circuits and functions of steps. Whether such functions will be implemented as software or hardware depends on the particular application and the restriction from the design of the whole system.

Various illustrative logical blocks, modules and circuits described in conjunction with the present disclosure may be implemented or performed by the following components that are designed to perform the above functions: a general purpose processor, a digital signal processor (DSP), a dedicated integrated circuit (ASIC), a field programmable gate array (FPGA) or other programmable logic device, discrete gates or transistor logics, discrete hardware components or any combination of these components. The general purpose processor may be a microprocessor. Alternatively, the processor may be any one of a conventional processor, a controller, a microcontroller, or a state machine. The processor may be implemented as a combination of computing devices, such as combination of a DSP and a microprocessor, a plurality of microprocessors, one or more microprocessors in conjunction with a DSP core, or any other such configuration.

The method and steps of the algorithm described in conjunction with the present disclosure may be directly contained in hardware, in a software module executed by a processor or in a combination of the both. The software may reside in a RAM memory, a flash memory, a ROM memory, an EPROM memory, an EEPROM memory, a registers, a hard disk, a removable disk, a CD-ROM, or any other storage medium known in the art. An exemplary storage medium is coupled to the processor such that the processor can read information from the storage medium or write information thereto. In an alternative embodiment, the storage medium may be integrated with the processor. The processor and the storage medium may reside in an ASIC which may reside in a user terminal. In an alternative embodiment, the processor and the storage medium may reside in a user terminal as discrete components.

In one or more exemplary designs, the above functions may be implemented in hardware, software, firmware, or any combination thereof. If implemented in software, the above functions may be stored in a computer readable medium as one or more instructions or codes, or transmitted through the computer readable medium. The computer readable medium includes computer storage medium and communication medium. The communication medium includes any medium that may be used to transmit computer programs from one location to another location. The storage medium may be any available medium that is accessible by a general or special computer. For example, but without limitation, the computer readable medium may include a RAM, a ROM, an EEPROM, a CD-ROM or other CD storage devices, disk storage devices or other magnetic storage devices, or any other medium that may be used to carry or store the required program codes in a form of instructions or data structure and may be accessible by a general or special computer, or a general or special processor. In addition, any connection may be appropriately referred as a computer-readable medium. For example, if a coaxial cable, a fiber optic cable, a twisted pair, a digital subscriber line (DSL) or wireless technologies such as infrared rays, radio and microwave are used to transmit software from a website, a server or other remote source, the above coaxial cable, the fiber optic cable, the twisted pair, the DSL or wireless technologies such as infrared rays, radio and microwave are all covered by the definition of the medium. As used herein, the disk and the optical disk includes a campact disk (CD), a laser disc, an optical disk, a digital versatile disc (DVD), a floppy disk, a blue-ray disk, among which the magnetic disk normally represents data magnetically, and the optical disk represents data optically by utilizing a laser. The combination of the above should also be included within the meaning of a computer readable medium.

The functions, steps and/or operations of the method claims according to the described embodiments of the present disclosure, may not necessarily be performed in a particular order. In addition, although elements of the present disclosure may be described or prescribed in a single form, multiple forms may also be devised, unless the single form is explicitly prescribed.

## Claims

1. A method for proportional adaption of page performed in a terminal device (1200) having a display screen, **characterized in that**, the method comprises:

   presetting N preset pages with different dimensions and defining an aspect ratio > 1 from a picture, wherein N is a positive integer greater than or equal to 2 and wherein each preset page has a fixed aspect-ratio;
   detecting (401) dimensions of the display screen, wherein the dimensions are expressed with width > height and corresponding to an aspect ratio of the display screen > 1;
   determining one preferred page from the N preset pages by:

   determining (403) a numerical interval in which the aspect ratio of the display screen falls from a plurality of preset numerical intervals of aspect ratio; and
   determining (404) a preset page falling within the numerical interval in which the aspect ratio of the display screen falls as the preferred page;

   and displaying (405) the preferred page on the display screen.

2. A terminal device (1200), comprising a memory (120); and one or more programs stored in the memory and configured to be executed by one or more processors (180), wherein the one or more programs comprises instructions for performing a method of claim 1.

3. A computer program, which when executing on a processor, performs a method according to claim 1.

4. A computer program product stored on a computer readable medium, comprising computer readable program means for causing a computer to perform the method of claim 1.

## Patentansprüche

1. Verfahren zur proportionalen Seitenanpassung, ausgeführt in einem Endgerät (1200) mit einem Anzeigeschirm, **dadurch gekennzeichnet, dass** das Verfahren Folgendes beinhaltet:

   Voreinstellen von N Voreinstellseiten mit unterschiedlichen Abmessungen und Definieren eines Aspektverhältnisses > 1 von einem Bild, wobei N eine positive ganze Zahl gleich oder größer als 2 ist und wobei jede Voreinstellseite ein festes Aspektverhältnis hat;
   Erkennen (401) von Abmessungen des Anzeigeschirms, wobei die Abmessungen mit Breite > Höhe ausgedrückt werden und einem Aspektverhältnis des Anzeigeschirms von > 1 entsprechen;
   Bestimmen einer bevorzugten Seite von den N Voreinstellseiten durch:

   Bestimmen (403) eines numerischen Intervalls, in das das Aspektverhältnis des Anzeigeschirms fällt, von mehreren voreingestellten numerischen Aspektverhältnisintervallen; und
   Bestimmen (404) einer Voreinstellseite, die in das numerische Intervall fällt, in das das Aspektverhältnis des Anzeigeschirms fällt, als die bevorzugte Seite;

   und Anzeigen (405) der bevorzugten Seite auf dem Anzeigeschirm.

**2.** Endgerät (1200), umfassend einen Speicher (120) und ein oder mehrere Programme, die in dem Speicher gespeichert und zum Ausführen durch einen oder mehrere Prozessoren (180) konfiguriert sind, wobei die ein oder mehreren Programme Befehle zum Ausführen eines Verfahrens nach Anspruch 1 umfassen.

**3.** Computerprogramm, das bei Ausführung auf einem Prozessor ein Verfahren nach Anspruch 1 durchführt.

**4.** Computerprogrammprodukt, gespeichert auf einem computerlesbaren Medium, das computerlesbare Programmmittel umfasst, um zu bewirken, dass ein Computer das Verfahren nach Anspruch 1 ausführt.

**Revendications**

**1.** Un procédé d'adaptation proportionnelle de page exécuté dans un dispositif terminal (1200) possédant un écran d'affichage, **caractérisé en ce que** le procédé comprend :

la prédéfinition de N pages prédéfinies avec des dimensions différentes et la définition d'un rapport d'aspect > 1 à partir d'une image, où N est un entier positif supérieur ou égal à 2 et où chaque page prédéfinie possède un rapport d'aspect fixe,
la détection (401) de dimensions de l'écran d'affichage, où les dimensions sont exprimées avec largeur > hauteur et correspondant à un rapport d'aspect de l'écran d'affichage > 1,
la détermination d'une page préférée à partir des N pages prédéfinies par :

la détermination (403) d'un intervalle numérique dans lequel se situe le rapport d'aspect de l'écran d'affichage à partir d'une pluralité d'intervalles numériques prédéfinis de rapport d'aspect, et
la détermination (404) d'une page prédéfinie se situant à l'intérieur de l'intervalle numérique dans lequel se situe le rapport d'aspect de l'écran d'affichage comme page préférée, et

l'affichage (405) de la page préférée sur l'écran d'affichage.

**2.** Un dispositif terminal (1200), comprenant une mémoire (120), et un ou plusieurs programmes conservés dans la mémoire et configurés de façon à être exécutés par un ou plusieurs processeurs (180), où les un ou plusieurs programmes contiennent des instructions destinées à l'exécution d'un procédé selon la Revendication 1.

**3.** Un programme informatique, qui, lorsqu'il est exécuté sur un processeur, exécute un procédé selon la Revendication 1.

**4.** Un produit de programme informatique conservé en mémoire sur un support lisible par ordinateur contenant un moyen de programme lisible par ordinateur destiné à amener un ordinateur à exécuter le procédé selon la Revendication 1.

Fig. 1

Fig. 2

31

Detect dimensions of a display interface

32

Determine one preferred page from N preset pages with different dimensions, wherein a dimension difference between the preferred page and the display interface falls within a preset range of difference, and N is a positive integer greater than or equal to 2

33

Display the preferred page on the display interface

Fig. 3

401

Detect dimensions of a display interface

402

Determine an aspect ratio of the display interface according to the dimensions of the display interface

403

Determine a numerical interval in which the aspect ratio of the display interface falls from a plurality of preset numerical intervals of aspect ratio

404

Determine an adaptive page configured for the numerical interval in which the aspect ratio of the display interface falls as the preferred page

405

Display the preferred page on the display interface

Fig. 4

Fig. 5

601

Detect dimensions of a display interface

602

Preset N pages with different dimensions, where N is a positive integer greater than or equal to 2

603

Determine respective clipped amount in width of each page among the N pages according to an equation as follows:

$$\frac{w_i}{(h_i - h_{id})} = \frac{w_x}{h_x}, \quad i = 1, 2, \cdots, N$$

Herein, $h_{id}$ is a clipped amount in width of the $i$th page in the N pages, $w_i$ is a length of the $i$th page, $h_i$ is a width of the $i$th page, $w_x$ is a length of the display interface, and $h_x$ is a width of the display interface

604

Determine a page which satisfies $0 \le h_{id} < h_i \times m_h\%$ and has a minimum numerical value of $h_{id}$ as the preferred page. Herein, $m_h\%$ is a preset maximum ratio for page clipping in width

605

Display the preferred page on the display interface

Fig. 6

701

Detect an aspect ratio of a display interface, the aspect ratio of the display interface is 16:11

702

Preset three pages with same content and different aspect ratios, where the aspect ratios are 4:3, 5:3, and 16:9, respectively

703

Determine that the aspect ratio 16:11 of the display interface is located between 4:3 and 5:3, and is closest to 4:3 in value

704

Determine the page with the aspect ratio of 4:3 as the preferred page

705

Display the above preferred page on the display interface

Fig. 7A

71

712

711

Fig. 7B

72

722

721

Fig. 7C

801

Detection
module

802

803

Determination
module

Display
module

Fig. 8

802

Determination module

901

Aspect ratio
determination
unit

902

903

Interval
determination
unit

First
processing
unit

Fig. 9

802

## Determination module

### Clipped amount determination unit
1001

### Second processing unit
1002

Fig. 10

Fig. 11

**EP 2 887 203 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201310699702
- US 20130147845 A1
- US 20100088630 A1
- US 20120075531 A1